# EUROPÄISCHE PATENTSCHRIFT

(11) **EP 1 512 953 B1**
(45) Veröffentlichungstag und Bekanntmachung des Hinweises auf die Patenterteilung: **10.12.2008**
(21) Anmeldenummer: 03020100.8
(22) Anmeldetag: 04.09.2003
(51) Int. Cl.: G01M 1/02

(54) **Verfahren und Vorrichtung zum optischen Abtasten eines Fahrzeugrades**
Procedure and apparatus for optical scanning of a vehicle wheel
Procédé et dispositif de balayage optique d' une roue de véhicule

(43) Veröffentlichungstag der Anmeldung: 09.03.2005
(73) Patentinhaber: Snap-on Equipment Srl a unico socio., 42015 Correggio (Reggio Emilia) (IT)
(72) Erfinder: Braghiroli, Francesco, 42100 Reggio Emilia (IT)
(74) Vertreter: Nöth, Heinz

(56) Entgegenhaltungen:
- EP-A- 0 565 320
- EP-A- 1 174 698
- WO-A-02/12851
- DE-A- 19 503 909
- US-A- 5 054 918
- US-A- 5 210 593
- US-A- 5 827 964

## Beschreibung

Die Erfindung betrifft ein Verfahren und eine Vorrichtung zum optischen Abtasten eines mit ortsfester Achse angeordneten Fahrzeugrades, insbesondere Kraftfahrzeugrades gemäß dem Oberbegriff der Ansprüche 1 und 9.

Bei derartigen aus EP 1 174 698 A2 (US 6,535,281 B2) bekannten Verfahren und Vorrichtungen wird die Oberfläche des Kraftfahrzeugrades mittels eines von einer Lichtquelle emittierten Lichtstrahls angetastet und von einem positionsempfindlichen Empfänger wird der zugeordnete reflektierte Strahl empfangen. Aus den Richtungen des emittierten Strahls und des reflektierten Strahls wird der Abstand der angetasteten Stelle zu einem Bezugsort gemessen, wobei mittels eines Drehantriebs die Lichtquelle und der positionsempfindliche Empfänger um eine gemeinsame Achse für aufeinanderfolgende Messschritte synchron geschwenkt werden.

Weiterhin ist es aus dem US-Patent 5,054,918 bekannt, den axialen Abstand der Felgenhörner voneinander zu erfassen. Hierzu wird das Kraftfahrzeugrad von außen und von innen optisch abgetastet.

Schließlich ist aus der europäischen Patentanmeldung 0 565 320 ein Verfahren bekannt, bei dem der axiale Abstand der Felgenhörner voneinander sowie der radiale Abstand der Felgenhörner von der Radachse ermittelt werden.

Es ist Aufgabe der vorliegenden Erfindung, ein Verfahren sowie eine Vorrichtung der eingangs genannten Art zu schaffen die es erlauben, auf zuverlässige Weise das Material der Felge zu bestimmen.

Diese Aufgabe wird beim Verfahren durch die Merkmale des Patentanspruches 1 und bei der Vorrichtung durch die Merkmale des Patentanspruches 9 gelöst.

Bei der Erfindung wird das mit ortsfester Achse, insbesondere drehbar, beispielsweise an der Messwelle einer Auswuchtmaschine gelagerte Fahrzeugrad von einem oder mehreren Lichtstrahlen, insbesondere Laserstrahlen abgetastet. Dabei wird ein jeweiliger Lichtstrahl aus wenigstens einer bestimmten Position auf die Oberfläche des Fahrzeugrades ausgesendet und ein jeweils zugeordneter von der Fahrzeugoberfläche reflektierter Strahl an wenigstens einer bestimmten Position empfangen. Aus der Richtung des jeweils ausgesendeten Strahls und des zugeordneten empfangenen Strahls werden Abmessungen und/oder Positionen von Bestandteilen des Fahrzeugrades, beispielsweise des Scheibenrades, der Felge, des Felgenhorns oder des Luftreifens rechnergestützt ermittelt und ausgewertet.

Um weiterhin die Materialdicke des Scheibenrades und der Felge zu erfassen, werden Lichtstrahlen sowohl auf die Innenseite als auch auf die Außenseite des Fahrzeugrades gerichtet und entsprechende reflektierte Strahlen erfasst. Hierzu sind zwei derartige Sensoreinrichtungen vorgesehen, von denen die eine Sensoreinrichtung die Radinnenseite und die andere Sensoreinrichtung die Radaußenseite erfasst.

Weiterhin kann vorzugsweise das Felgenprofil sowohl an der Radinnenseite als auch an der Außenseite des Rades ermittelt werden. Hieraus lässt sich der Felgentyp bzw. Typ des Scheibenrades ermitteln. Ergänzend hierzu können die Felgenhörner erfasst werden.

Ferner kann beim Abtasten der Felge an der Radrückseite und/oder der Radaußenseite festgestellt werden, ob an der Felge ein Unwuchtausgleichgewicht oder mehrere Unwuchtausgleichsgewichte befestigt ist bzw. sind. Außerdem kann die Position des jeweiligen Ausgleichsgewichts dabei festgestellt werden.

Ferner kann die Position, insbesondere Drehwinkelposition eines Reifenventils, mit welchem der Luftreifen des Kraftfahrzeugrades gefüllt wird, erfasst werden. Diese Ventilposition kann als Referenzposition (Null-Position) bei der Drehwinkelerfassung am Kraftfahrzeugrad verwendet werden.

Vorzugsweise in Verbindung mit der Erfassung von Radspeichen mittels der optischen Lichtabtastung kann für die Erfassung der Drehwinkelpositionen der verschiedenen Speichen am Kraftfahrzeugrad die Ventilposition als Referenzposition verwendet werden. Mit der beschriebenen Licht-, insbesondere Laserabtastung können die Positionen und Abmessungen vorzugsweise der Speichenenden an der Felge erfasst werden. Die Kenntnis dieser Positionen und Abmessungen erleichtert das Hinterspeichenplazieren der Unwuchtausgleichsgewichte, wie es aus dem US-Patent 5,591,909 bekannt ist.

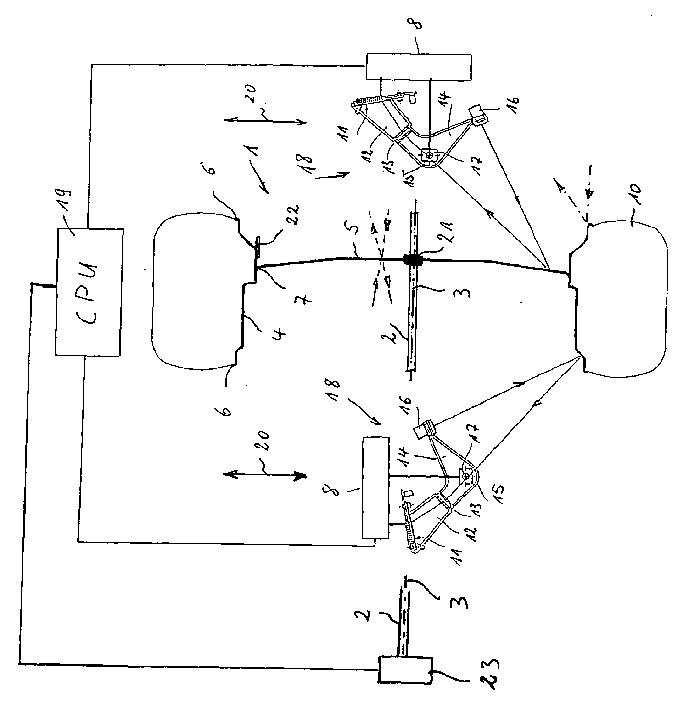

Anhand der Figur wird an einem Ausführungsbeispiel die Erfindung noch näher erläutert.

Die Figur zeigt in schematischer Darstellung ein Fahrzeugrad, welches in herkömmlicher Weise ein Scheibenrad 5 und eine am Umfang des Scheibenrades 5 befestigte Felge 4 aufweist. An der Felge 4 ist ein Luftreifen 10 gelagert. Reifenwülste sind in bekannter Weise an Felgenhörner 6 der Felge 4 abgestützt.

Das Fahrzeugrad 1, insbesondere Kraftfahrzeugrad ist in bekannter Weise an einer Messwelle 2 einer nicht näher dargestellten Radauswuchtmaschine befestigt und um eine durch die Messwelle 2 definierte Drehachse, welche bei zentrierter Aufspannung mit einer Radachse 3 zusammenfällt, drehbar gelagert. Auf diese Weise wird an der Radauswuchtmaschine eine ortsfeste Anordnung der Radachse 3 gewährleistet.

Mit einer oder mehreren Sensoreinrichtungen 18 können die Abmessungen und Positionen von Bestandteilen des Fahrzeugrades 1 gemessen und rechnergestützt ermittelt werden. Jede Sensoreinrichtung beinhaltet eine Lichtquelle 16, welche vorzugsweise als Laser ausgebildet ist. Ferner beinhaltet jede Sensoreinrichtung 18 einen Empfänger 12, welcher als positionssensitives Empfangselement vorzugsweise einen CCD-Sensor aufweist. Die Lichtquelle 16 und der Empfänger 12 sind an einem Träger 14 befestigt. Der Träger 14 ist um eine Schwenkachse 17 schwenkbar gelagert. Ferner kann der Träger 14 linear (Doppelpfeil 20) oder auf einer vorgegebenen Führungsbahn gegenüber der Messwelle 2 und einer Befestigungsposition 21 des Fahrzeugrades 1 an der Messwelle 2 beweglich gelagert sein. Die Schwenkbewegung und die gegebenenfalls zusätzliche lineare oder geführte Bewegung kann mit Hilfe eines nicht näher dargestellten Antriebs, beispielsweise in Form eines oder mehrerer Schrittmotore bewirkt werden. Am Träger 14 ist ferner eine Empfängeroptik 13 vorgesehen. Die Empfängeroptik 13 und der CCD-Sensor 11 sind Bestandteile des Empfängers 12.

Die Lichtquelle 16 sendet einen Lichtstrahl auf die Oberfläche des Fahrzeugrades 1 aus. Von dort wird das Licht in einem zugeordneten reflektierten Strahl reflektiert und gelangt durch die fokussierende Empfängeroptik 13 auf die Sensorelemente des CCD-Sensors 11. Der CCD-Sensor 11 kann mehrere lokale Maxima einer Beleuchtungsstärkefunktion getrennt voneinander erfassen. Die Richtung des reflektierten Strahls hängt von der Entfernung der auf dem Fahrzeugrad 1 abgetasteten Stelle zur Lichtquelle 16 ab. In Abhängigkeit von diesem Abstand wird der reflektierte Strahl über die Empfängeroptik 13 auf eine bestimmte Stelle des CCD-Sensors 11 gerichtet und dann in ein positionsempfindliches oder positionsabhängiges Signal gewandelt. Dieses wird an eine Messelektronik 8 weitergeleitet, welche ferner mit einem Positionsgeber 15 verbunden ist. Der Positionsgeber 15 liefert an die Messelektronik 8 Positionssignale, welche den jeweiligen Positionen der Lichtquelle 16 und des CCD-Sensors 11 proportional sind. Die Lichtquelle 16 und der Empfänger 12 sind synchron miteinander bewegbar, da sie am gemeinsamen Träger 14 befestigt sind. Die Positionssignale sind bezogen auf eine an der nicht näher dargestellten Maschine vorhandene Referenzposition und damit bezogen auf die ortsfest an der Maschine gelagerte Messwelle 2 und die axiale Befestigungsposition 21, an welcher das Fahrzeugrad 1 an der Messwelle 2 befestigt ist.

Die Messelektronik 8 erzeugt Messsignale, welche den Positionen der Oberflächenstellen des Kraftfahrzeugrades 1 entsprechen, die von den von der Lichtquelle 16 ausgesendeten Lichtstrahlen abgetastet werden.

Mit Hilfe von zwei Sensoreinrichtungen 18, welche der Innenseite des Kraftfahrzeugrades (linke Sensoreinrichtung 18 in der Figur) und der Außenseite des Fahrzeugrades 1 (rechte Sensoreinrichtung 18 in der Figur) zugeordnet sind, können alle Oberflächenpunkte des Kraftfahrzeugrades 1 und insbesondere alle Oberflächenpunkte auf dem Scheibenrad 5 und der Felge 4 erfasst werden.

Geeignete Sensoreinrichtungen 18 sind aus EP 1,174,698 A2 (= US-Patent 6,535,281) bekannt. Es ist jedoch auch möglich, nur eine Sensoreinrichtung 18 zu verwenden, welche auf einem vorbestimmten Führungsweg sowohl an der Innenseite als auch an der Außenseite des Fahrzeugrades 1 in entsprechende Messpositionen gebracht werden kann.

Zur Erfassung aller Oberflächenpunkte des Fahrzeugrades 1 kann dieses drehbar um die Radachse 3 mit der Messwelle 2 gelagert sein. Die Messelektronik 8, welche die entsprechenden Messsignale liefert, kann Bestandteil der jeweiligen Sensoreinrichtung 18 sein. Es ist jedoch auch möglich, die Messelektronik 8 in eine als Rechner ausgebildete Auswerteeinrichtung 19 zu integrieren. Aufgrund der beschriebenen Messanordnung können rechnergestützt durch die Auswerteeinrichtung 19 Abmessungen und Positionen von Bestandteilen des Fahrzeugrades 1 sowie Eigenschaften dieser Bestandteile bestimmt und ausgewertet werden.

Mit Hilfe der beschriebenen Messanordnung können der Auswerteeinrichtung 19 Positionsdaten von an der Oberfläche der Felge 4 abgetasteten Stellen übermittelt werden, aus denen das Profil an der Felgenoberfläche 4 bestimmt werden kann. Aus dem Profil der Felge ergeben sich die Stellen, an denen beim Auswuchten des Fahrzeugrades 1 in bevorzugter Weise Ausgleichsgewichte, beispielsweise Klebegewichte anzuordnen sind. Hierbei wird vorzugsweise an der Radinnenseite die Felgenoberfläche von der Sensoreinrichtung 18 abgetastet, wie dies durch die in der Figur dargestellte linke Sensoreinrichtung 18 schematisch dargestellt ist. In gleicher Weise kann auch an der Radaußenseite die Felgenkontur abgetastet werden.

Ferner können die Formen der Felgenhörner 6 abgetastet werden. Hierzu wird die jeweilige Sensoreinrichtung 18 entsprechend positioniert und der von der Lichtquelle ausgesendete Lichtstrahl aus unterschiedlichen Richtungen auf das jeweilige Felgenhorn gerichtet, wie es in der Figur schematisch durch strichpunktierte Linien am rechten untenliegenden Teil des äußeren Felgenhornes dargestellt ist. Durch Verschwenken und gegebenenfalls geradliniges oder sonstwie geführtes Bewegen der Sensoreinrichtung 18 kann dann das Profil oder die Form des Felgenhornes erfasst werden. Aus der Form des Felgenhornes ergibt sich ferner ein Hinweis auf den Fahrzeughersteller. Die Serviceperson kann dann aus der entsprechenden Datenbank Hinweise für die Wahl der zu verwendenden Unwuchtausgleichsgewichte entnehmen.

Ferner kann die Dicke des Scheibenrades 5 gemessen werden. Hierzu wird die Oberfläche des Scheibenrades 5 an der Außenseite und an jeweiligen vorzugsweise gegenüberliegenden Stellen der Innenseite abgetastet, wie es durch die strichlierten Darstellungen der ausgesendeten und zugehörigen reflektierten Strahlen in der Figur schematisch gezeigt ist. Aus den beiden Informationen der Positionen der an der Außen- und Innenseite des Fahrzeugrades 1 angetasteten einander gegenüberliegenden Oberflächenstellen kann in der Auswerteeinrichtung 19 die Dicke des Scheibenrades 5 erfasst werden.

Aus den gemessenen geometrischen Daten für das Scheibenrad 5 und für die Felge 6 sowie aus der ermittelten Form der Felgenhörner 6 kann der Radtyp bestimmt werden. Man erhält beispielsweise eine Information, ob es sich um ein Scheibenrad und eine Felge aus Stahl oder aus Leichtmetall handelt.

Ferner kann die Position eines Reifenfüllventils 22 bei der Abtastung der Radaußenseite mittels der Sensoreinrichtung 18 erfasst werden. Die Drehwinkelposition des Reifenfüllventils 22 am Fahrzeugrad 1 kann eine Drehwinkelreferenzposition, beispielsweise Null-Position bei der Erfassung der Positionen von Speichen des Scheibenrades 5 verwendet werden. Die Erfassung der Drehwinkellagen von Speichen des Scheibenrades 5 kann ebenfalls mit der Sensoreinrichtung 18 erfolgen. Hierbei wird der von der Lichtquelle 16 ausgesendete Lichtstrahl vorzugsweise auf den Bereich eines Speichenendes 7 gerichtet, an welchem die Speiche bzw. das Scheibenrad 5 mit der Felge 4 verbunden ist. Unter den Begriff "Speichen" werden auch von der Radnabe bis zur Felge 4 durchgehende Scheibenradteile verstanden, zwischen denen Ausnehmungen im Scheibenrad vorgesehen sind. Die Bestimmung der Drehwinkellagen mit Hilfe der Sensoreinrichtung 18 erweist sich insbesondere beim Hinterspeichenplatzieren von Unwuchtausgleichsgewichten, wie es beispielsweise aus der US-Patentschrift 5,591,909 bekannt ist, von Vorteil.

Die Drehwinkellage des Reifenfüllventils 22 kann ferner eine Referenzposition für ein Matchen, d.h. ein Verdrehen des Reifens, gegenüber der Felge 4 bzw. dem Scheibenrad 5 darstellen.

Die Erfassung der Drehwinkelpositionen für die Speichen und das Reifenfüllventil 22 erfolgt in Zusammenwirkung mit Drehwinkelsignalen, die von einem mit der Messwelle 2 gekoppelten Drehwinkelgeber 23 an die Auswerteeinrichtung 19 geliefert werden. Es ist bekannt, in einer Radauswuchtmaschine einen derartigen Drehwinkelgeber mit der Messwelle 2 zu verbinden.

Ferner kann mit Hilfe der jeweiligen Sensoreinrichtung 18 das Vorhandensein von Unwuchtausgleichsgewichten an der Felge 4 und die Position dieser Ausgleichsgewichte festgestellt werden. Insbesondere bei breiten Felgen wird hierdurch die Gefahr vermieden, dass die Bedienungsperson derartige Ausgleichsgewichte, insbesondere beim Reifenwechsel oder bei Messungen am Scheibenrad übersieht.

Vorzugsweise ist die Sensoreinrichtung 18, welche zur Abtastung der Innenseite des Fahrzeugrades dient, schwenkbar am Maschinenrahmen der nicht näher dargestellten Auswuchtmaschine gelagert, wie dies beispielsweise aus EP 1 174 698 A2 (= US 6,535,281 B2) bekannt ist. Die die Außenseite des Fahrzeugrades 1 abtastende Sensoreinrichtung 18 (rechte Sensoreinrichtung 18 in der Figur) kann an einem schwenkbaren Rahmen, insbesondere an einer nicht näher dargestellten Radschutzhaube, welche in bekannter Weise bei einer Radauswuchtmaschine vorgesehen ist, vorgesehen sein. Vorzugsweise ist diese Sensoreinrichtung 18 schwenkbar gelagert. Sie kann zusätzlich an dem schwenkbaren Rahmen bzw. der Radabdeckhaube noch linear (Doppelpfeilrichtung 20) verschiebbar gelagert sein.

Die Erfindung ist bei Fahrzeugrädern jeglicher Art, beispielsweise Kraftfahrzeugrädern, Motorradrädern, Nutzfahrzeugrädern u.dgl. anwendbar.

### [Bezugszeichenliste]

- 1: Fahrzeugrad
- 2: Messwelle
- 3: Radachse
- 4: Felge
- 5: Scheibenrad
- 6: Felgenhorn
- 7: Speichenende
- 8: Messelektronik
- 9: Auswerteelektronik
- 10: Luftreifen
- 11: CCD-Sensor
- 12: Empfänger
- 13: Empfängeroptik
- 14: Träger
- 15: Positionsgeber
- 16: Lichtquelle
- 17: Schwenkachse
- 18: Sensoreinrichtung
- 19: Auswerteeinrichtung
- 20: lineare Führungsrichtung
- 21: axiale Befestigungsposition
- 22: Reifenfüllventil
- 23: Drehwinkelgeber

## Patentansprüche

1. Verfahren zum optischen Abtasten eines mit ortsfester Achse angeordneten Fahrzeugrades mittels eines oder mehrerer Lichtstrahlen, bei dem ein jeweiliger Lichtstrahl aus wenigstens einer bestimmten Position auf die Oberfläche des Fahrzeugrades ausgesendet wird, und ein jeweils zugeordneter von der angestrahlten Fahrzeugoberfläche reflektierter Strahl an wenigstens einer bestimmten Position empfangen wird, wobei aus den Richtungen des jeweils ausgesendeten Strahls und des zugeordneten reflektierten und empfangenen Strahls Abmessungen und Positionen von Bestandteilen des Fahrzeugrades rechnergestützt ermittelt werden, wobei die Bestandteile eine Felge (4) und ein Scheibenrad (5) umfassen,
**dadurch gekennzeichnet, dass** wenigstens zwei einander gegenüberliegende Oberflächenstellen an der Radinnenseite und der Radaußenseite abgetastet werden und aus den Positionsdaten dieser abgetasteten Stellen die Dicke des Radmaterials im Bereich des Scheibenrades (5) rechnergestützt ermittelt wird.

2. Verfahren nach Anspruch 1,
**dadurch gekennzeichnet, dass** mit dem wenigstens einen ausgesendeten Lichtstrahl und dem zugeordneten reflektierten Lichtstrahl das Felgenprofil des Fahrzeugrades abgetastet wird.

3. Verfahren nach Anspruch 1 oder 2,
**dadurch gekennzeichnet, dass** die Radoberfläche im Bereich der Felgenhörner abgetastet wird und aus den jeweiligen dabei gewonnen Positionsdaten die Form oder das Profil des jeweiligen Felgenhorns bestimmt wird.

4. Verfahren nach einem der Ansprüche 1 bis 3,
**dadurch gekennzeichnet, dass** aus den geometrischen Daten der Radbestandteile der Radtyp bestimmt wird.

5. Verfahren nach einem der Ansprüche 1 bis 4,
**dadurch gekennzeichnet, dass** durch die Abtastung an der Felge befestigte Ausgleichsgewichte erfasst werden.

6. Verfahren nach einem der Ansprüche 1 bis 5,
**dadurch gekennzeichnet, dass** durch die Abtastung der Radoberfläche die Drehwinkelposition eines Reifenfüllventils, welches zum Befüllen des Luftreifens dient, erfasst wird.

7. Verfahren nach einem der Ansprüche 1 bis 6,
**dadurch gekennzeichnet, dass** die Drehwinkelposition des Reifenfüllventils als Referenzposition für Drehwinkellagen am Fahrzeugrad bestimmt wird.

8. Verfahren nach einem der Ansprüche 1 bis 7,
**dadurch gekennzeichnet, dass** die Drehwinkelpositionen von Radspeichen, insbesondere im Bereich der Speichenenden, die mit der Felge verbunden sind, erfasst werden.

9. Vorrichtung zum optischen Abtasten eines mit ortsfester Achse an einer Messwelle (2) einer Radauswuchtmaschine befestigten Fahrzeugrades (1) mit wenigstens einer Lichtquelle (16) zum Aussenden eines Lichtstrahls auf die Radoberfläche, einem synchron mit der Lichtquelle (16) beweglichen Lichtempfänger (11, 12, 13) zum Empfangen eines von der Radoberfläche reflektierten Lichtstrahls und einer Auswerteeinrichtung (18, 19), welche an den Empfänger (11, 12, 13) und einen die Positionen der Lichtquelle (16) und des Empfängers (11, 12, 13) angebenden Positionsgebers (15) angeschlossen ist, wobei die Auswerteeinrichtung (18, 19) so gestaltet ist, dass sie aus den Richtungen des jeweils ausgesendeten Strahls und des zugeordneten empfangenen Strahls Abmessungen und Positionen von Bestandteilen des Fahrzeugrades (1) rechnergestützt ermittelt, wobei die Bestandteile eine Felge (4) und ein Scheibenrad (5) umfassen,
**dadurch gekennzeichnet, dass** wenigstens zwei die Radinnenseite und die Radaußenseite abtastende Sensoreinrichtungen (18) mit der Lichtquelle (16) und dem Empfänger (11, 12, 13) vorhanden sind, wobei die Auswerteeinrichtung (18, 19) so gestaltet ist, dass sie die Dicke des Radmaterials im Bereich des Scheibenrades (5) aus den Positionsdaten der abgetasteten Stellen rechnergestützt ermittelt.

10. Vorrichtung nach Anspruch 9,
**dadurch gekennzeichnet, dass** die die Radaußenseite abtastende Sensoreinrichtung (18) an einer Radschutzhaube der Radauswuchtmaschine befestigt ist.

## Claims

1. A method of optically scanning a vehicle wheel which is arranged with a stationary axis, by means of one or more light beams, in which a respective light beam is directed from at least one given position on to the surface of the vehicle wheel and a respectively associated beam reflected by the irradiated vehicle wheel surface is received at at least one given position, wherein dimensions and positions of constituent parts of the vehicle wheel are ascertained in a computer-aided procedure from the directions of the respectively emitted beam and the associated reflected and received beam, wherein the constituent parts are a rim (4) and a wheel disc (5),
**characterised in that** at least two mutually opposite surface locations at the inside of the wheel and the outside of the wheel are scanned and the thickness of the wheel material in the region of the wheel disc (5) is ascertained in a computer-aided procedure from the positional data in respect of those scanned locations.

2. A method according to claim 1 **characterised in that** the rim profile of the vehicle wheel is scanned with the at least one emitted light beam and the associated reflected light beam.

3. A method according to claim 1 or claim 2 **characterised in that** the wheel surface is scanned in the region of the rim flanges and the shape or the profile of the respective rim flange is determined from the respective positional data obtained **in that** operation.

4. A method according to one of claims 1 to 3 **characterised in that** the wheel type is determined from the geometrical data of the wheel constituent parts.

5. A method according to one of claims 1 to 4 **characterised in that** balancing weights fixed to the rim are detected by the scanning operation.

6. A method according to one of claims 1 to 5 **characterised in that** the rotary angle position of a tyre inflation valve which serves to inflate the pneumatic tyre is detected by the operation of scanning the wheel surface.

7. A method according to one of claims 1 to 6 **characterised in that** the rotary angle position of the tyre inflation valve is determined as a reference position for rotary angle positions on the vehicle wheel.

8. A method according to one of claims 1 to 7 **characterised in that** the rotary angle positions of wheel spokes, in particular in the region of the spoke ends which are connected to the rim, are detected.

9. Apparatus for optically scanning a vehicle wheel (1) which is fixed with a stationary axis to a measuring shaft (2) of a wheel balancing machine, comprising at least one light source (16) for emitting a light beam on to the wheel surface, a light receiver (11, 12, 13) movable synchronously with the light source (16) for receiving a light beam reflected from the wheel surface and an evaluation device (18, 19) which is connected to the receiver (11, 12, 13) and a position sender (15) specifying the positions of the light source (16) and the receiver (11, 12, 13), wherein the evaluation device is adapted to ascertain dimensions and positions of constituent parts of the vehicle wheel (1) in a computer-aided procedure from the directions of the respectively emitted beam and the associated received beam, wherein the constituent parts are a rim (4) and a wheel disc (5),
**characterised in that** there are provided at least two sensor devices (18) having the light source (16) and the receiver (11, 12, 13), for scanning the inside of the wheel and the outside of the wheel, wherein the evaluation device (18, 19) is so designed that it ascertains the thickness of the wheel material in the region of the wheel disc (5) in a computer-aided procedure from the positional data in respect of the scanned locations.

10. Apparatus according to claim 9 **characterised in that** the sensor device (18) for scanning the outside of the wheel is fixed to a wheel guard hood of the wheel balancing machine.

## Revendications

1. Procédé de balayage optique d'une roue de véhicule montée en ayant l'axe fixe en position, au moyen d'un ou de plusieurs faisceaux lumineux dans lequel on envoie un faisceau lumineux respectif d'au moins une position déterminée sur la surface de la roue du véhicule et on reçoit, en au moins une position déterminée, un faisceau associé réfléchi par la surface du véhicule ayant reçu le faisceau en déterminant par le calcul des dimensions et des positions de parties constitutives de la roue du véhicule à partir des directions du faisceau émis et du faisceau associé réfléchi et reçu, les parties constitutives comprenant une jante (4) et une roue (5) à disques,
**caractérisé en ce que** l'on balaie au moins deux points de surfaces mutuellement opposées sur la face intérieure de la roue et sur la face extérieure de la roue et on détermine par le calcul, à partir des données de position de ces points balayés, l'épaisseur de la matière de la roue dans la zone de la roue (5) à disques.

2. Procédé suivant la revendication 1,
**caractérisé en ce que** l'on balaie le profil de la jante du véhicule automobile par le au moins un faisceau lumineux émis et le faisceau lumineux associés respectifs.

3. Procédé suivant la revendication 1 ou 2,
**caractérisé en ce que** l'on balaie la surface de la roue dans la zone du rebord de jante et on détermine la forme ou le profil du rebord de jante à partir des données de position obtenues.

4. Procédé suivant l'une des revendications 1 à 3,
**caractérisé en ce que** l'on détermine le type de roue à partir des données géométriques des parties constitutives de la roue.

5. Procédé suivant l'une des revendications 1 à 4,
**caractérisé en ce que** l'on détecte par le balayage des masses de compensation fixées à la jante.

6. Procédé suivant l'une des revendications 1 à 5,
**caractérisé en ce que** l'on détecte par balayage de la surface de la roue, la position angulaire en rotation d'une soupape de gonflage de pneumatiques qui sert à gonfler les pneumatiques.

7. Procédé suivant l'une des revendications 1 à 6,
**caractérisé en ce que** l'on détermine la position angulaire en rotation de la soupape de gonflage de pneumatiques en tant que position de référence pour une position angulaire en rotation sur la roue de véhicule.

8. Procédé suivant l'une des revendications 1 à 7,
**caractérisé en ce que** l'on détecte la position angulaire en rotation de rayon de la roue, notamment dans la zone des extrémités des rayons, qui sont reliés à la jante.

9. Dispositif de balayage optique d'une roue (1) de véhicule fixé en ayant l'axe fixe en position à un arbre (2) de mesure d'une machine d'équilibrage de roue, comprenant au moins une source (16) lumineuse pour émettre un faisceau lumineux sur la surface de la roue, un récepteur (11, 12, 13) linéaire mobile en synchronisation avec la source (16) lumineuse et destiné à recevoir un faisceau lumineux réfléchi par la surface de la roue, et un dispositif (18, 19) d'exploitation qui est raccordé au récepteur (11, 12, 13) et à un indicateur (15) de position indiquant les positions de la source (16) lumineuse et du récepteur (11, 12, 13), le dispositif (18, 19) d'exploitation étant réalisé de telle sorte qu'il détermine par le calcul des dimensions et des positions de parties constitutives de la roue (1) du véhicule à partir des directions du faisceau émis et du faisceau associé reçu, les parties constitutives comprenant une jante (4) et une roue (5) à disques,
**caractérisé en ce qu'**il est prévu au moins deux dispositifs (18) de capteurs balayant la face intérieure de la roue et la face extérieure de la roue avec la source (16) lumineuse et le récepteur (11, 12, 13), le dispositif (18, 19) d'exploitation étant réalisé de telle sorte que l'épaisseur de la matière de la roue est déterminée par le calcul dans la zone de la roue (5) à disques à partir des données de position des points balayés.

10. Dispositif suivant la revendication 9,
**caractérisé en ce que** le dispositif (18) de capteurs balayant la face extérieure de la roue est fixé au capot de protection de la roue de la machine d'équilibrage de roue.
